# EUROPÄISCHE PATENTSCHRIFT

(11) **EP 0 657 004 B1**
(45) Veröffentlichungstag und Bekanntmachung des Hinweises auf die Patenterteilung: **04.09.1996**
(21) Anmeldenummer: 94916906.4
(22) Anmeldetag: 15.06.1994
(51) Int. Cl.: F16K 11/20, B60T 8/36, F16K 11/22

(54) **VENTILEINHEIT MIT EINANDER GEGENÜBERLIEGENDEN VENTILEN**
VALVE UNIT WITH OPPOSED VALVES
ENSEMBLE A SOUPAPES OPPOSEES

(30) Priorität: 30.06.1993 DE 4321695
(43) Veröffentlichungstag der Anmeldung: 14.06.1995
(73) Patentinhaber: ROBERT BOSCH GMBH, 70442 Stuttgart (DE)
(72) Erfinder: ZECHMANN, Jürgen, D-74081 Heilbronn (DE)
(86) Internationale Anmeldenummer: DE9400665
(87) Internationale Veröffentlichungsnummer: WO9501525

(56) Entgegenhaltungen:
- EP-A- 0 337 180
- CH-A- 544 248
- US-A- 1 690 251
- US-A- 4 612 845
- US-A- 4 690 465

## Beschreibung

### Stand der Technik

Die Erfindung geht aus von einer konventionellen Ventileinheit mit einem Paar von gleichachsigen, einander bezüglich einer Bezugsebene, in der ein Druckmittelkanal verläuft, gegenüberliegenden Ventilen. Eine derartige Ventileinheit ist in der US-PS 4 612 845 beschrieben. Die bekannte Ventileinheit besitzt ein blockförmiges, gleichzeitig als Ventilgehäuse dienendes, feststehendes Ventilelement mit einer axial durchgehenden Mittelbohrung, mit der der Druckmittelkanal in Form einer Querbohrung verbunden ist, die zur Außenseite des Ventilelements bzw. des Ventilgehäuses führt. Weitere Querbohrungen dienen dem Anschluß einer Pumpe und eines Verbrauchers und, in Verbindung mit einer axialen Bohrung, der Herstellung einer Druckmittelverbindung mit axial im Abstand voneinander vorgesehenen Bereichen der Mittelbohrung.

Mit dem feststehenden, block- bzw. gehäuseförmigen Ventilelement wirken bei der bekannten Ventileinheit durch steuerbare Antriebseinrichtungen betätigbare bewegliche Ventilkörper der beiden gleichachsig angeordneten Ventile zusammen, wobei die beweglichen Ventilkörper in axialer Richtung hintereinanderliegende Teilstücke größeren und kleineren Durchmessers aufweisen, wodurch Steuerkanten und -flächen zum Öffnen und Schließen von Druckmittelverbindungen geschaffen werden. Die als elektromagnetische Antriebseinrichtungen ausgebildeten Antriebseinrichtungen für die beweglichen Ventilkörper sind dabei auf der Außenseite des feststehenden Ventilelements montiert.

Ein wichtiger Vorteil der bekannten Ventileinheit gemäß der zitierten US-PS 4 612 845 besteht darin, daß ein Doppelventil mit zwei separat steuerbaren Einzelventilen durch die Verwendung eines gemeinsamen, feststehenden Ventilelements, welches gleichzeitig als Ventilgehäuse dient, sehr kompakt aufgebaut werden kann. Bei besonders kleinen Ventilen erweist es sich jedoch gelegentlich als problematisch, in dem blockförmigen Ventilelement die verschiedenen Bohrungen, Ringnuten und Verbindungskanäle kostengünstig mit der erforderlichen Präzision herzustellen.

Aus der US-PS 4 690 465 ist ferner eine vergleichsweise kompakte piezoelektrisch betätigte Ventileinheit mit mehreren Paaren von gleichachsigen, einander bezüglich einer Bezugsebene gegenüberliegenden Ventilen bekannt, bei denen die beweglichen Ventilkörper kugelförmige, unter einer Federvorspannung stehende Ventilkörper sind, von denen jeder mit einem konischen bzw. kegelförmigen Ventilsitz als feststehendem Ventilelement zusammenwirkt. Dabei sind die Ventilsitze in plattenförmigen Elementen eines aus mehreren miteinander verschraubten Einzelteilen aufgebauten Ventilgehäuses vorgesehen. Die Teilung des Gehäuses in mehrere einzelne Elemente ermöglicht dabei eine relativ einfache und präzise Bearbeitung der einzelnen Ventilsitze, bringt jedoch insgesamt erhöhte Fertigungskosten mit sich, da die einzelnen Elemente des Ventilgehäuses präzise gegeneinader justiert werden müssen, um die einzelnen Abschnitte durchgehender Druckmittelkanäle fluchtend gegeneinander und bezüglich der Ventilsitze auszurichten.

### Aufgabenstellung

Ausgehend von dem vorstehend diskutierten Stand der Technik, insbesondere gemäß der US-PS 4 612 845,liegt der vorliegenden Erfindung die Aufgabe zugrunde, eine verbesserte Ventileinheit anzugeben, die insbesondere in Form einer hydraulischen ABS-Ventileinheit mit zwei Paaren von gleichachsigen, einander gegenüberliegenden Ventilen, nämlich eines Paares von Einlaßventilen und eines Paares von Auslaßventilen platzsparend und kostengünstig herstellbar ist.

### Vorteile der Erfindung

Die gestellte Aufgabe wird durch eine erfindungsgemäße Ventileinheit mit den Merkmalen des Patentanspruchs 1 gelöst, wobei insbesondere der Vorteil erzielt wird, daß durch die separate Herstellung des für beide Ventile gemeinsamen feststehenden Ventilelements eine kostengünstige und präzise Fertigung der Ventilsitze ermöglicht wird.

Ein weiterer wichtiger Vorteil der erfindungsgemäßen Ventileinheit besteht darin, daß bereits bei der Fertigung des feststehenden Ventilelements der richtige Abstand zwischen den Ventilsitzen hergestellt werden kann, so daß für die beiden Ventile des betreffenden Ventilpaares diesbezüglich keine weiteren Justierarbeiten erforderlich sind. Außerdem läßt sich das als Präzisionsteil gefertigte feststehende Ventilelement anschließend im Preßsitz problemlos in die gewünschte Position im Inneren des Ventilgehäuses bringen, um ein Fluchten der Querbohrung mit dem Druckmittelkanal zu erreichen, wobei die gewünschte Position gegebenenfalls durch eine Schulter vorgegeben werden kann, die in einer Bohrung des Ventilgehäuses als Anschlag bei der Montage des feststehenden Ventilelements dient.

Durch die in den Unteransprüchen angegebenen Maßnahmen bzw. Merkmale sind vorteilhafte Weiterbildungen und Verbesserungen der Ventileinheit gemäß Patentanspruch 1 möglich.

Insbesondere besteht in Ausgestaltung der Erfindung die vorteilhafte Möglichkeit, die Ventileinheit als hydraulische ABS-Ventileinheit mit zwei Paaren von elektromagnetisch betätigbaren Ventilen auszubilden, von denen das eine Ventilpaar zwei Einlaßventile umfaßt, während das andere Ventilpaar zwei Auslaßventile umfaßt. Bei dieser Ausgestaltung einer Ventileinheit gemäß der Erfindung besteht ferner die vorteilhafte Möglichkeit, zwei zu separaten Radbremszylindern führende Auslaßleitungen über ein jeweils zugeordnetes Rückschlagventil einer Rückschlagventilanordnung mit einem Ablaßkanal der Ventileinheit zu verbinden, um bei Überdruck eine Schnellentlastung herbeizuführen.

### Zeichnung

Weitere Einzelheiten und Vorteile der Erfindung werden nachstehend anhand eines ausgewählten, besonders vorteilhaften Ausführungsbeispiels einer Ventileinheit gemäß der Erfindung in Verbindung mit einer Zeichnung noch näher erläutert. Es zeigen:
- Fig. 1: einen axialen, teilweise schematischen Längsschnitt durch die Ventileinheit gemäß der Erfindung und
- Fig. 2 und 3: Detaildarstellungen zweier bevorzugter Ausführungsformen von Rückschlagventileinrichtungen für die Ventileinheit gemäß Fig. 1.

### Beschreibung des Ausführungsbeispiels

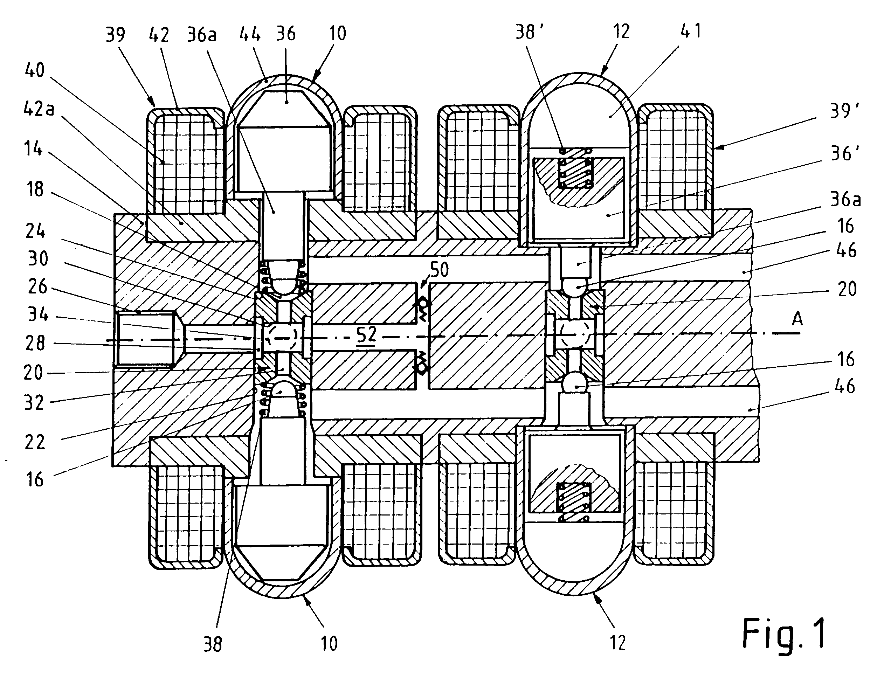

Im einzelnen zeigt Fig. 1 als Ausführungsbeispiel der Erfindung eine Ventileinheit, die als hydraulische ABS-Ventileinheit ausgebildet ist. Diese Ventileinheit umfaßt ein erstes Ventilpaar mit zwei Einlaßventilen 10 und ein zweites Ventilpaar mit zwei Auslaßventilen 12.

Die Einlaßventile 10 und die Auslaßventile 12 sind an einem gemeinsamen Ventilgehäuse 14 angebaut bzw. in dieses eingebaut; ferner sind alle vier Einzelventile 10, 12 elektromagnetisch betätigbarte Ventile, wie dies nachstehend noch näher erläutert werden wird.

Betrachtet man zunächst die Einlaßventile 10, so wird aus Fig. 1 der Zeichnung deutlich, daß jedes dieser Ventile 10 ein bewegliches, kugelförmiges Ventilelement bzw. einen kugelförmigen Ventilkörper 16 aufweist. Die beiden kugelförmigen Ventilkörper 16 wirken jeweils mit einem kegelförmigen bzw. konischen Ventilsitz 18 zusammen. Dabei sind die Ventilsitze 18 an den stirnseitigen Enden eines den beiden Einlaßventilen 10 gemeinsamen feststehenden Ventilelements 20 vorgesehen. Das feststehende Ventilelement 20 ist ein buchsenförmiger, im allgemeinen zylindrischer Körper, der im Preßsitz in einer Bohrung 22 des Ventilgehäuses 14 angeordnet ist, die beim Ausführungsbeispiel eine Schulter 24 aufweist, welche beim Einpressen des Ventilelements 20 in die Bohrung 22 als Anschlag zum exakten Positionieren des Ventilelements 20 dient. Es hat sich jedoch gezeigt, daß ein exaktes Positionieren des feststehenden Ventilelements 20 in der Bohrung 22 des Ventilgehäuses 14 bei Verwendung eines geeigneten Preßwerkzeugs und unter Verwendung einer Außenfläche des Ventilgehäuses 14 als Bezugsfläche auch ohne Vorhandensein einer Schulter 24 ohne weiteres möglich ist.

In seiner in Fig. 1 gezeigten Einbaulage ist das Ventilelement 20 symmetrisch zu einer durch eine strichpunktierte Linie angedeuteten Bezugsebene A angeordnet, wobei die Linie A mit der Achse eines Druckmittelkanals 26 zusammenfällt, der in dem Gehäuse 14 vorgesehen ist und einen mit einem Innengewinde versehenen Einlaßbereich aufweist, an dem mit Hilfe eines üblichen Fittings (nicht gezeigt) ein externer Anschluß, insbesondere der Anschluß eines Hauptbremszylinders angebracht werden kann. Das innere Ende des Druckmittelkanals 26 mündet in eine Ringnut 28 des Ventilelements 20. Ausgehend von der Ringnut 28 besitzt das Ventilelement 20 eine Querbohrung 30, welche eine axial durchgehende Mittelbohrung 32 des feststehenden Ventilelements 20 schneidet. Eine zu der Querbohrung 30 senkrechte, durch gestrichelte Linien angedeutete zweite Querbohrung 34 verbindet die Mittelbohrung 32 in der Praxis mit der Druckseite einer motorisch angetriebenen Rückförderpumpe (nicht gezeigt).

Bei beiden Einlaßventilen 10 sind die mit dem jeweils zugeordneten Ventilsitz 18 zusammenwirkenden Ventilkugeln bzw. beweglichen Ventilkörper 16 mit einem zapfenförmigen Ansatz 36a eines Ankers 36 verbunden. In der Praxis erfolgt die Verbindung der Ventilkugel 16 mit dem Anker 36 dabei allgemein in der Weise, daß an der freien Stirnfläche des Ansatzes 36a ein konischer Sitz ausgebildet wird, in dem die Ventilkugel 16 durch Verschweißen oder Verkleben, insbesondere aber durch Hartlöten festgelegt wird. Hierdurch wird das bewegliche kugelförmige Ventilelement 16 zu einem integralen Bestandteil des Ankers 36. Der Anker 36 ist mittels einer Druckfeder in Form einer Schraubenfeder 38 bezüglich der Bezugsebene bzw. Symmetrieebene A des Ventilgehäuses 14 federnd nach außen vorgespannt, wobei sich die Enden der Schraubenfeder 38 einerseits an einer Schulter am Ansatz 36a und andererseits an der zugeordneten Stirnfläche des feststehenden Ventilelements abstützen.

Der Anker 36 wirkt mit einem Magnetkreis 39 zusammen, der als Hauptbestandteil eine Spule 40 aufweist, die von einem Gehäuse 42 aus magnetisch leitfähigem Material umgeben ist. Mit Hilfe des Magnetkreises 39 bzw. durch Erzeugen eines Erregerstromes in der Spule 40 kann für den Anker 36 ein Magnetfeld erzeugt werden, durch welches dieser entgegen der Kraft der Schraubenfeder 38 nach innen bewegt wird, bis der Ventilkörper 16 an dem zugeordneten Ventilsitz 18 dichtend anliegt. Wenn der magnetische Fluß endet, wird der Anker 36 durch die Feder 38 wieder nach außen gedrückt, wobei eine becherförmige Abdeckung, die nachstehend als Dom 44 bezeichnet wird, einen Anschlag für die Auswärtsbewegung des Ankers 36 bildet. Der Dom 44 und das Gehäuse 42 bzw. dessen Einzelteile sind dabei dichtend miteinander verbunden, insbesondere verpreßt, verstemmt oder verschweißt, um Anker und Magnetkreis gegen externe Einflüsse zu schützen. Aus Fig. 1 wird deutlich, daß eine Grundplatte 42a des Gehäuses 42 in einer entsprechenden Aussparung des Ventilgehäuses 14 festgelegt, insbesondere in diese eingepreßt ist, wobei der Boden der Vertiefung einen Anschlag für die Positionierung der vorstehend beschriebenen äußeren Ventilteile bezüglich des feststehenden Ventilelements 20 bildet.

Bei der als Ausführungsbeispiel betrachteten hydraulischen ABS-Ventileinheit sind die Einlaßventile 10 bei stromlosen Spulen 40 normalerweise offen und schließen bei Fließen eines entsprechenden Erregerstroms in den Spulen 40. Bei offenen Einlaßventilen 10 ist der Druckmittelkanal 26 über die Querbohrung 30 und die Mittelbohrung 32 des feststehenden Ventilelements 20 mit zwei in dem Ventilgehäuse 14 vorgesehenen parallelen, axialen Kanälen 46 verbunden, an deren auslaßseitigem Ende - in Fig. 1 rechts - Anschlüsse (nicht gezeigt) für Radbremszylinder vorgesehen sind, wobei einer der Kanäle 46 beispielsweise den Radbremszylindern eines vorderen Radpaars eines Kraftfahrzeugs zugeordnet ist, während der andere Kanal den Radbremszylindern eines hinteren Radpaars zugeordnet ist. Die Radbremszylinder können also mit Druck beaufschlagt werden, wobei vorausgesetzt wird, daß die Auslaßventile 12 geschlossen sind, was bei der gezeigten Ventileinheit dann der Fall ist, wenn die Spulen des Magnetkreises stromlos sind, wie dies nachstehend erläutert wird.

Im einzelnen ist bei den Auslaßventilen 12, die im übrigen ebenso aufgebaut sind wie die Einlaßventile 10, anstelle der innenliegenden Schraubenfeder 38 eine außenliegende Schraubenfeder 38' vorgesehen, welche sich einerseits an dem Anker 36' und andererseits an einem Element 41 aus magnetisierbarem Material abstützt, welches an der Innenseite des Doms 44 anliegt und einen Bestandteil des Magnetkreises 39' bildet. Aufgrund der beschriebenen Anordnung der Schraubenfeder 38' ist jedes der Auslaßventile 12 in seine Schließstellung vorgespannt und öffnet aufgrund einer Auswärtsbewegung des Ankers 36', wenn die Spule 40 von einem entsprechenden Erregerstrom durchflossen wird. Beim Öffnnen der Auslaßventile 12 wird über die Mittelbohrung 32 und die Querbohrung 34 (gestrichelt angedeutet) des den Auslaßventilen 12 zugeordneten feststehenden Ventilelements 20 - gegebenenfalls über einen Zwischenspeicher - eine Verbindung zu der Rückförderpumpe (nicht gezeigt) hergestellt, so daß praktisch verzögerungsfrei ein Druckabbau an den Radbremszylindern erfolgt.

Insgesamt besteht bei der in Fig. 1 gezeigten Ventileinheit durch selektive Ansteuerung der Einlaßventile 10 einerseits und der Auslaßventile 12 andererseits gemäß der vorstehenden Beschreibung die Möglichkeit, die an den Kanälen 46 angeschlossenen Radbremszylinder mit unter Druck stehendem Druckmittel zu beaufschlagen und das Druckmittel für Beendigung oder Unterbrechung eines Bremsvorgangs durch Öffnen der Auslaßventile 12 abzubauen. Dabei besitzt die Ventileinheit insgesamt trotz der zwei Ventilpaare einen sehr kompakten Aufbau, da die Druckmittelzufuhr auf der Einlaßseite der Einlaßventile und die Druckmittelabführung auf der Auslaßseite der Auslaßventile im Bereich des jeweils für ein Ventilpaar gemeinsamen feststehenden Ventilelements 20 außerordentlich platzsparend mit einem Raumbedarf erfolgt, der aus konstruktiven Gründen nur unwesentlich größer ist als der Platzbedarf für die Mittelbohrungen, die Querbohrungen und die Ventilsitze. Des weiteren ergeben sich hinsichtlich der Positionierung des gemeinsamen feststehenden Ventilelements einerseits und der äußeren Ventilteile mit den Antriebseinrichtungen andererseits aufgrund des Vorhandenseins von Anschlagflächen und/oder der Verwendung von geeigneten Preßwerkzeugen keinerlei Schwierigkeiten, so daß auch eine exakte Justierung der vier Einzelventile der Ventileinheit problemlos möglich ist.

Zusätzlich zu den vorstehend beschriebenen Ventilen ist bei der Ventileinheit gemäß Fig. 1 zwischen den zu den Radbremszylindern führenden Kanälen 46 noch eine Rückschlagventilanordnung 50 vorgesehen, die in Fig. 1 nur ganz schematisch angedeutet ist und für jeden der Kanäle 46 jeweils ein Rückschlagventil umfaßt, welches bei einem Überdruck in dem jeweils zugeordneten Kanal 46 öffnet und so eine schnelle Druckentlastung ermöglicht, indem eine entsprechende Menge des unter einem hohen Druck stehenden Druckmittels in einen in dem Gehäuse 14 vorgesehenen Ablaßkanal 52 abgeleitet wird und dann zum Hauptbremszylinder fließt.

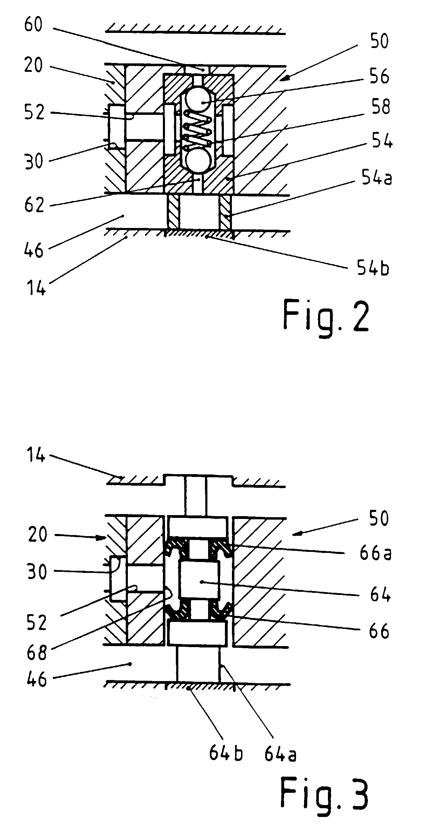

In Fig. 2 und 3 sind zwei bevorzugte Ausführungsbeispiele von Rückschlagventilanordnungen für eine Ventileinheit gemäß Fig. 1 gezeigt.

Im einzelnen zeigt Fig. 2 eine Rückschlagventilanordnung 50 mit einem eigenen kleinen Ventilgehäuse 54. In einer Kammer im Inneren dieses kleinen Ventilgehäuses sind zwei Ventilkugeln 56 vorgesehen, die mittels einer dazwischen angeordneten Druckfeder 58 nach außen gegen Ventilsitze vorgespannt sind, wobei der eine Ventilsitz zu einer Einlaßöffnung 60 gehört, die dem einen Kanal 46 zugeordnet ist, während der andere Ventilsitz zu einer Einlaßöffnung 62 gehört, die zu dem anderen Kanal 46 offen ist. Bei einem Überdruck in einem der Kanäle 46 hebt die betreffende Ventilkugel 56 entgegen der Federkraft von ihrem Ventilsitz ab, wodurch eine Verbindung zwischen der Einlaßöffnung 60 bzw. 62 und dem Ablaßkanal 52 geschaffen wird, der beim Ausführungsbeispiel direkt in die Ringnut 28 des benachbarten feststehenden Ventilelements 20 mündet. Das in den Ablaßkanal 52 eintretende Druckmittel kann also bei geschlossenen Einlaßventilen 10 und Entlastung des Hauptbremszylinders durch Freigabe des Bremspedals zu dem Hauptbremszylinder abgeführt werden. Die beiden Rückschlagventile der Rückschlagventilanordnung 50 bilden also für jedes der normalerweise offenen Einlaßventile 10 jeweils einen "Einwegbypass" zu dem mit dem Anschluß 26 verbundenen Hauptbremszylinder (nicht gezeigt).

Beim Ausführungsbeispiel umfaßt das kleine Gehäuse 54 Streben 54a - oder auch eine durchbrochene Wand -, die den Kanal 46 durchgreifen, ohne diesen zu blockieren, und an deren äußeren Enden ein Stopfen 54b vorgesehen ist, der dem dichtenden Verschließen einer zur Montage der Rückschlagventilanordnung 50 in dem Ventilgehäuse 14 angebrachten Bohrung dient.

Die in Fig. 3 gezeigte Rückschlagventilanordnung weist ein stempelförmiges Element 64 auf, welches in axialer Richtung aufeinanderfolgend Bereiche größeren und kleineren Durchmessers aufweist und zwei Manschetten 66 trägt, die im Querschnitt im wesentlichen U-förmig ausgebildet sind und deren U-Profil sich zu der Seite öffnet, die jeweils von dem zugeordneten Kanal 46 abgewandt ist. Das stempelförmige Trägerelement 64 mit den Manschetten 66 ist zwischen den Kanälen 46 in einer Bohrung 68 des Ventilgehäuses 14 angebracht, so daß sich zwischen den Manschetten 66 in der Bohrung 68 eine Kammer bildet, die mit dem Ablaßkanal 52 in Verbindung steht, der wiederum zu der Ringnut 28 geführt ist. Jede der Manschetten 66 besitzt eine umlaufende äußere Dichtlippe 66a, die normalerweise dichtend an der Wand der Bohrung 68 anliegt, jedoch bei einem Überdruck in dem zugeordneten Kanal 46 radial nach innen ausweicht und dadurch eine Verbindung über den Ablaßkanal 52 in Richtung auf den Hauptbremszylinder freigibt. Die Manschetten 66 mit ihren Dichtlippen 66a wirken damit ähnlich wie die federnd vorgespannten Ventilkugeln bei der Rückschlagventilanordnung gemäß Fig. 2. Ferner besitzt auch das stempelförmige Element 64 eine stegartige Verlängerung 64a, die in einem Stopfen 64b endet, der dem dichtenden Verschließen einer Bohrung in dem Ventilgehäuse 14 dient, welche zur Montage der Rückschlagventilanordnung 50 hergestellt wurde.

Wie aus der vorstehenden Erläuterung der Rückschlagventilanordnung insbesondere in Verbindung mit Fig. 2 und 3 deutlich wird, läßt sich in vorteilhafter Ausgestaltung der Erfindung speziell in Verbindung mit den Einlaßventilen und insbesondere in Verbindung mit dem feststehenden Ventilelement derselben eine kompakte Rückschlagventilanordnung realisieren, die im Bedarfsfall für eine schnelle Druckentlastung der Radbremszylinder sorgt.

## Patentansprüche

1. Ventileinheit mit mindestens einem Paar von gleichachsigen, einander bezüglich einer Bezugsebene, in der ein Druckmittelkanal (26) verläuft, gegenüberliegenden Ventilen (10) mit einem gemeinsamen Ventilelement (20) mit einer axial durchgehenden Mittelbohrung (32) und einer damit und mit dem Druckmittelkanal verbundenen Querbohrung (30) und jeweils einem damit zusammenwirkenden, durch steuerbare Antriebseinrichtungen (39) betätigbaren beweglichen Ventilkörper (16) zum Öffnen und Schließen einer Druckmittelverbindung von oder zu der axialen Mittelbohrung, dadurch gekennzeichnet, daß das gemeinsame Ventilelement als ein fest in einer Bohrung eines Ventilgehäuses (14) montiertes einstückiges buchsenförmiges Ventilelement (20) ausgebildet ist, welches an seinen beiden stirnseitigen Enden jeweils einen Ventilsitz (18) zum Zusammenwirken mit dem jeweils zugeordneten beweglichen Ventilkörper (16) aufweist.

2. Ventileinheit nach Anspruch 1, dadurch gekennzeichnet, daß jedes der Ventile (10, 12) als Ventil mit elektromagnetischen Antriebseinrichtungen (39, 39') ausgebildet ist und einen unter einer Federvorspannung stehenden, den beweglichen Ventilkörper (16) tragenden Anker (36, 36') aufweist.

3. Ventileinheit nach Anspruch 2, dadurch gekennzeichnet, daß der bewegliche Ventilkörper als Ventilkugel (16) ausgebildet und einstückig mit dem Anker (36, 36') des zugeordneten Ventils (10, 12) verbunden ist.

4. Ventileinheit nach einem der Ansprüche 1 bis 3, gekennzeichnet, durch ihre Ausbildung als hydraulische ABS-Ventileinheit mit zwei Paaren von Ventilen (10, 12), von denen die einen als normalerweise offene Einlaßventile (10) und die anderen als normalerweise geschlossene Auslaßventile (12) ausgebildet sind.

5. Ventileinheit nach einem der Ansprüche 1 bis 4, dadurch gekennzeichnet, daß in dem feststehenden Ventilelement (20) quer zu der Querbohrung (30) eine weitere Querbohrung (34) vorgesehen ist.

6. Ventileinheit nach Anspruch 4 oder 5, dadurch gekennzeichnet, daß zwei auslaßseitige Druckmittelkanäle (46) vorgesehen sind und daß die beiden auslaßseitigen Druckmittelkanaäle (46) jeweils über ein Rückschlagventil einer Rückschlagventilanordnung (50) zum schnellen Druckabbau in den auslaßseitigen Druckmittelkanälen (46) mit einem Ablaßkanal (52) verbunden sind.

7. Ventileinheit nach Anspruch 6, dadurch gekennzeichnet, daß die Rückschlagventilanordnung (50) zwei jeweils mit einem der auslaßseitigen Druckmittelkanäle (46) verbundene Kugel-Rückschlagventile umfaßt, deren Ventilkugeln (56) gemeinsam unter der Vorspannung einer auf beide Ventilkugeln (56) einwirkenden Vorspannfeder (58) stehen.

8. Ventileinheit nach Anspruch 6, dadurch gekennzeichnet, daß die Rückschlagventilanordnung (50) für jeden der auslaßseitigen Druckmittelkanäle (46) eine Manschette (66) mit einer Dichtlippe (66a) umfaßt, die bei einem Überdruck zum Öffnen einer Verbindung zu einem Hauptbremszylinder über einen Ablaßkanal (52) auslenkbar ist.

## Claims

1. Valve unit with at least one pair of coaxial valves (10) located opposite one another in relation to a reference plane in which a pressure-medium channel (26) extends, having a common valve element (20) with an axially continuous middle bore (32) and a transverse bore (30) connected thereto and to the pressure-medium channel and, in each case, with a movable valve body (16), cooperating therewith and actuable by controllable drive devices (39), for opening and closing a pressure-medium connection from or to the axial middle bore, characterized in that the common valve element is designed as a one-piece sleeve-shaped valve element (20) which is mounted fixedly in a bore of a valve housing (14) and which has, on each of its two end faces, a respective valve seat (18) for cooperating with the respective associated movable valve body (16).

2. Valve unit according to Claim 1, characterized in that each of the valves (10, 12) is designed as a valve with electromagnetic drive devices (39, 39') and has an armature (36, 36') which is under a spring pretension and which supports the movable valve body (16).

3. Valve unit according to Claim 2, characterized in that the movable valve body is designed as a valve ball (16) and is connected in one piece to the armature (36, 36') of the associated valve (10, 12).

4. Valve unit according to one of Claims 1 to 3, characterized by its design as a hydraulic ABS valve unit with two pairs of valves (10, 12), of which the first are designed as normally open inlet valve (10) and the others as normally closed outlet valves (12).

5. Valve unit according to one of Claims 1 to 4, characterized in that a further transverse bore (34) is provided transversely to the transverse bore (30) in the stationary valve element (20).

6. Valve unit according to Claim 4 or 5, characterized in that two pressure-medium channels (46) located on the outlet side are provided, and in that the two pressure-medium channels (46) located on the outlet side are each connected via a non-return valve of a non-return valve arrangement (50) to a bleed channel (52) for rapid pressure reduction in the pressure-medium channels (46) located on the outlet side.

7. Valve unit according to Claim 6, characterized in that the non-return valve arrangement (50) comprises two non-return ball valves which are each connected to one of the pressure-medium channels (46) located on the outlet side and the valve balls (56) of which are jointly under the pretension of a pretensioning spring (58) acting on both valve balls (56).

8. Valve unit according to Claim 6, characterized in that the non-return valve arrangement (50) comprises, for each of the pressure-medium channels (46) located on the outlet side, a collar (66) having a sealing lip (66a) which, in the event of excess pressure, can be deflected in order to open a connection to a brake master cylinder via a bleed channel (52).

## Revendications

1. Ensemble de soupapes comportant au moins une paire de soupapes coaxiales (10) situées à l'opposé l'une de l'autre par rapport à un plan de référence dans lequel se trouve un canal (26) de fluide sous pression, ensemble dans lequel :
- les soupapes ont une partie commune (20) traversée par un canal médian (32) et par un alésage transversal (30) relié au canal médian (32) ainsi qu'au canal de fluide sous pression,
- chaque soupape comporte un corps (16) qui peut se déplacer sous l'action d'un dispositif d'entraînement (39) commandé, pour ouvrir ou fermer une liaison destinée au fluide sous pression, partant de l'alésage médian ou y aboutissant,
caractérisé en ce que la partie fixe commune aux soupapes est un élément (20) monobloc en forme de douille montée fixe dans un alésage d'un boîtier de soupape (14), un siège de soupape (18) étant porté par chacune des extrémités frontales de l'élément (20) pour coopérer avec le corps mobile (16) de la soupape qui lui est associée.

2. Ensemble de soupapes selon la revendication 1, caractérisé en ce que chacune des soupapes (10, 12) est équipée d'un dispositif d'entraînement électromagnétique (39, 39') et présente une armature (36, 36') portant les corps mobiles (16) et soumise à une tension élastique.

3. Ensemble de soupapes selon la revendication 2, caractérisé en ce que le corps mobile de soupape est équipé d'une bille de soupape (16) et forme une seule pièce avec l'armature (36, 36') de la soupape (10, 12) qui lui est associée.

4. Ensemble de soupapes selon l'une des revendications 1 à 3, caractérisé en ce que cet ensemble est un ensemble hydraulique faisant partie d'un freinage ABS et comportant deux paires de soupapes (10, 12) dont la première est constituée de soupapes d'entrée (10) normalement ouvertes tandis que la seconde est constituée de soupapes de sortie (12) normalement fermées.

5. Ensemble de soupapes selon l'une des revendications 1 à 4, caractérisé en ce que l'élément fixe (20) des soupapes comporte, en plus de l'alésage transversal (30), un second alésage transversal (34) perpendiculaire au premier.

6. Ensemble de soupapes selon la revendication 4 ou 5, caractérisé en ce qu'il comporte, du côté de la sortie, deux canaux (46) de fluide sous pression et en ce que ces deux canaux (46) sont reliés chacun, du côté de la sortie, à un canal de décharge (52) par l'intermédiaire d'un dispositif à deux soupapes antiretour (50) afin de faire tomber rapidement la pression dans les canaux (46) du côté de la sortie.

7. Ensemble de soupapes selon la revendication 6, caractérisé en ce que le dispositif à soupapes antiretour (50) comporte deux soupapes antiretour à bille reliées chacune à l'un des canaux de fluide sous pression, vers la sortie, les billes (56) de ces soupapes se trouvant au repos sous la tension commune exercée sur elles deux par un ressort (58).

8. Ensemble de soupapes selon la revendication 6, caractérisé en ce que le dispositif à soupapes antiretour (50) comporte, pour chacun des canaux (46) de fluide sous pression, une manchette (66) terminée par une lèvre d'étanchéité (66a) qui peut se déplacer sous l'effet d'une surpression en établissant une liaison avec le maître-cylindre de freinage, par l'intermédiaire d'un canal de décharge (52).
